# EUROPÄISCHE PATENTANMELDUNG

(11) **EP 4 001 687 A1**
(43) Veröffentlichungstag der Anmeldung: **25.05.2022**
(21) Anmeldenummer: 20207774.9
(22) Anmeldetag: 16.11.2020
(51) Int. Cl.: F16D 55/2265, F16D 55/227

(54) **SCHEIBENBREMSE FÜR FAHRZEUGE, INSBESONDERE FÜR NUTZFAHRZEUGE**

(71) Anmelder: ZF CV Systems Europe BV, 1170 Brussels (BE)
(72) Erfinder: HECKER, Jannis, 69121 Heidelberg (DE); SCHERER, Vitalij, 69181 Leimen (DE)
(74) Vertreter: Rabe, Dirk-Heinrich

(57) **Zusammenfassung**

Scheibenbremse für Fahrzeuge, insbesondere für Nutzfahrzeuge umfassend einen Bremssattel und einen Bremsträger, wobei der der Bremssattel während einer, bezogen auf eine Bremsscheibe, axialen Bewegung über einen ersten Führungsbolzen mit einer den ersten Führungsbolzen zumindest teilweise ummantelten ersten Buchse (7, 7a) in einer ersten Bolzenführung des Bremssattels gleitet und über einen zweiten Führungsbolzen mit einer den zweiten Führungsbolzen zumindest teilweise ummantelten zweiten Buchse (7, 7a) in einer zweiten Bolzenführung des Bremsententrägers gleitet, wobei zumindest die erste Buchse radial in Richtung des ersten Führungsbolzen wenigstens zwei Prägungen (9, 9a) aufweist oder die zweite Buchse radial in Richtung des zweiten Führungsbolzen wenigstens zwei Prägungen (9, 9a) aufweist.

## Beschreibung

Die Erfindung betrifft eine Scheibenbremse für Fahrzeuge, insbesondere betrifft die Erfindung eine Gleitsattelscheibenbremse für Nutzfahrzeuge. Scheibenbremsen sind dazu eingerichtet Fahrzeuge bis zum Stillstand abzubremsen. Übelicherweise werden die Scheibenbremsen über einen Membranzylinder oder einen Federspeicherzylinder aktuiert. Der Membranzylinder oder der Federspeicherzylinder spannen eine Bremsscheibe axial in Richtung der Bremsscheibe über einen der Scheibenbremse umfassenden Drehhebel und einem in der Scheibenbremse angeordneten Kolben mittels einen zuspannseitigen Bremsbelag und einen reaktionsseitigen Bremsbelag zu. Als zuspannseitiger Bremsbelag ist der in Richtung des Kolbens angeordnete Bremsbelag definiert. Als reaktionsseitiger Bremsbelag ist, der dem zuspannseitigen Bremsbelag gegenüberliegende in Richtung einer Felge des Fahrzeugs angeordnete Bremsbelag definiert. Weiterhin umfasst die Scheibenbremse einen Bremssattel und einen Bremsenträger. Der zuspannseitige Bremsbelag und der reaktionsseitige Bremsbelag werden im Bremsenträger axial verschiebbar geführt und abgestützt. Die Halterung des zuspannseitigen Bremsbelags und des reaktionsseitigen Bremsbelags erfolgen durch einen Belagniederhaltebügel und durch Niederhaltefedern. Der Bremssattel gleitet axial während einer axialen Bewegung über zwei Führungsbolzen - auch Passbolzen und Spielbolzen genannt - des Bremsenträgers. Der Passbolzen weist in Bezug auf den Spielbolzen einen größeren Durchmesser und damit ein kleineres Spiel in der Bolzenführung auf. Die Führungsbolzen sind in Bolzenführungen des Bremssattels angeordnet, wobei die Bolzenführungen auf der der Bremsscheibe abgewandten Seite einen Verschlussdeckel aufweisen und die Führungsbolzen gegen Verschmutzungen schützen. Auf der dem Verschlussdeckel gegenüberliegenden Seite der Bolzenführungen sind an den Bolzenführungen je eine Schutzkappe angebracht. Die Schutzkappe können die Form eines Faltenbalg aufweisen. Zwischen einer Innenwand der Bolzenführungen und der Führungsbolzen sind Buchsen angeordnet. Die Buchsen ermöglichen mittels der Führungsbolzen ein axiales Gleiten des Bremssattels über den Bremsenträger.

Die Buchsen sind vorrangig Metallformteile. Es ist aber auch denkbar, dass die Buchsen aus einem anderen Material wie zum Beispiel aus Kunststoff hergestellt sind.

Zwischen den Führungsbolzen und der Innenwände der Bolzenführungen besteht ein tangentiales und radiales Spiel, was wiederum zu unerwünschten Geräuschen - z.B. Klappergeräusche - führt. Das tangentiale Spiel wird zur Aufnahme des Führungsbolzen benötigt und kann nicht verhindert werden. Das radiale Spiel weist dagegen keinen technischen Effekt auf und kann zur Verhinderung von Klappergeräuschen minimiert werden.

Zur Vermeidung der Klappergeräusche sind wurden in der Vergangenheit unterschiedliche Lösungen entwickelt.

Eine gängige Lösung zur Minimierung von Klappergeräuschen ist die Verformung der kreisrunden Buchse in eine ovalförmige Buchse. Die ovalförmige Buchse wird über aufwändige Sinterverfahren hergestellt. In dem Sinterverfahren wird oft unter erhöhten Druck die kreisrunde Buchse erhitzt und in eine Ovalform umgeformt bzw. verdichtet.

Die DE 103 11 896 A1 beschreibt eine Verformung der Buchse, um eine axiale Fixierung der Buchse in der Bolzenführung zu erreichen.

Eine mittels Prägeverfahren hergestellte Buchse ist in der EP 3 492 768 A1. Die Buchse kann aus einen der Materialien wie Metall, Bronze Kunststoff oder Metall hergestellt sein. Lediglich die Innenwand der Buchse weist trogartige Prägungen auf, die als Schmierstoffreservoir dienen und den Gleitvorgang des Bremssattels unterstützten. Die Buchse weist einen Außenumfang auf der kleiner ist als der Innendurchmesser einer in der Bolzenführung eingebrachten Bohrung. Eine Minimierung des radialen Spiels zwischen den Führungsbolzen und der Innenwände der Bolzenführungen zur Verhinderung von Klappergeräuschen wird nicht offenbart.

In der WO 2016/066409 A1 wird eine ovalförmige Buchse beschrieben. Zur Herstellung der Buchse wird ein Metallband mit einer variierenden Materialstärke verwendet. Mit dem Herstellungsverfahren wird ein aufwändiges Sinterverfahren vermieden. Das Metallband muss aber abschnittsweise in unterschiedliche Materialstärken ausgerollt werden. Dieser Vorgang ist aufwändig und kostenintensiv, da die Rolle abschnittsweise mit unterschiedlichem Druck das Metallband ausrollen muss. Es können auch mehrere, mit unterschiedlichem Druck aufweisende Rollen eingesetzt werden.

Aufgabe der Erfindung ist es, den aufgezeigten Stand der Technik zu überwinden und eine Buchse für einen Führungsbolzen einer Scheibenbremse bereitzustellen, die kostengünstig in der Herstellung ist und die Vorteile einer oval geformten Buchse aufweist.

Gelöst wird die Aufgabe dadurch, dass zumindest eine erste Buchse radial in Richtung eines ersten Führungsbolzen eines Bremsträgers eine Scheibenbremse wenigstens zwei Prägung aufweist oder die zweite Buchse eines Bremsträgers eine Scheibenbremse radial in Richtung des zweiten Führungsbolzen wenigstens zwei Prägungen aufweist. Die Prägungen weisen den Effekt der Minimierung oder Verhinderung des radialen Lüftspiels in dem als Spielbolzen ausgebildeten ersten Führungsbolzen oder dem zweiten Führungsbolzen auf. Der als nicht definierte Spielbolzen ist als Passbolzen ausgebildet. Der Spielbolzen weist die Eigenschaft auf, die Montage des Bremssattels zu vereinfachen und den Bremssattel mit dem Bremsträger, ohne ein Verklemmen zu verbinden. Mit den Prägungen auf der dem Spielbolzen ummantelnden ersten Buchse oder zweiten Buchse ist eine oval ausgestaltete Buchse nicht mehr notwendig.

In einer weiteren vorteilhaften Ausgestaltung weisen die Prägungen in Richtung des ersten Führungsbolzen oder des zweiten Führungsbolzen eine konvexe Form oder eine abgeflachte Form auf. Die Prägungen können auch rippenförmig als Aufdickung ausgestaltet sein. Die Prägungen vermindern das Lüftspiel zwischen einer Innenwand der ersten Buchse und dem ersten Führungsbolzen oder zwischen einer Innenwand der zweiten Buchse und dem zweiten Führungsbolzen.
Als besonders vorteilhaft hat sich eine konvexe Form der Prägungen herausgestellt, da die Prägungen sich während eines Aufrollverfahrens zur Herstellung der Buchse nicht verformen. Die konvexe Form weist besonders vorteilhaft den gleichen Radius auf wie eine Innenwand der ersten Buchse oder eine Innenwand der zweiten Buchse. Die abgeflachten Prägungen weisen den Vorteil auf, dass sie vor einem Aufrollverfahren zur Herstellung der ersten Buchse oder zur Herstellung der zweiten Buchse oder nach einem Aufrollverfahren in die erste Buchse oder die zweite Buchse mittels eines Press- oder Stanzwerkzeugs eingebracht werden können. Je nach Geometrie des ersten Führungsbolzen oder des zweiten Führungsbolzen können die Prägungen verschiedene geometrische Formen aufweisen und die Gleiteigenschaften erhöhen als auch die Auflageflächen des ersten Führungsbolzen oder des zweiten Führungsbolzen vergrößern und somit das Lüftspiel verkleinern. Als Lüftspiel ist der Abstand der Innenwand der ersten Buchse zu einer Außenwand des ersten Führungsbolzen bzw. der Abstand zu der Innenwand der zweiten Buchse zu einer Außenwand des zweiten Führungsbolzen definiert.

In einer weiteren Ausgestaltung weist die erste Buchse radial in Richtung des ersten Führungsbolzen zumindest zwei Prägungen an einer Innenwand der ersten Buchse und gespiegelt radial entgegengesetzt der Richtung des ersten Führungsbolzen zumindest zwei Prägungen an einer Außenwand der ersten Buchse auf. Es ist auch möglich das die zweite Buchse radial in Richtung des zweiten Führungsbolzen zumindest zwei Prägungen an einer Innenwand der zweiten Buchse und gespiegelt radial entgegengesetzt der Richtung des zweiten Führungsbolzen zumindest zwei Prägungen an einer Außenwand der zweiten Buchse aufweist. Mit anderen Worten ausgedrückt, sind auf der Innenwand der ersten Buchse oder auf der Innenwand der zweiten Buche zwei radial gegenüberliegende Prägungen angeordnet, wobei die Prägungen in Richtung des ersten Führungsbolzen oder in Richtung des zweiten Führungsbolzen vorstehen. Weiterhin sind gegenüberliegend der zwei innenseitigen Prägungen auf der Außenwand des ersten Bolzens oder auf der Außenwand des zweiten Bolzens zwei weitere Prägungen angeordnet. Die zusätzlich auf der Außenwand In der Ausgestaltung sind die Prägungen abgeflacht, sodass der kreisrunde Innendurchmesser und der kreisrunde Außendurchmesser der ersten Buchse oder der kreisrunde Innendurchmesser und der kreisrunde Außendurchmesser der zweiten Buchse in radialer Richtung unterbrochen sind. In der Ausgestaltung wird die erste Buchse oder die zweite Buchse nach einem Aufrollverfahren geprägt. Die erste Buchse oder die zweite Buchse können somit variabel nach Kundenwunsch eingesetzt werden und bei Bedarf nach Herstellung der ersten Buchse oder nach Herstellung der zweiten Buchse zur Verminderung von Klappergeräuschen zusätzlich geprägt werden.

Es hat sich weiterhin gezeigt, dass die Prägungen in einer weiteren Ausgestaltung verschiedene Formen umfassend eine Rechtecksform, eine Stabform, eine quadratische Form ein aufweisen können. Die Prägungen können axial sowohl durchgängig als auch unterbrochen oder nur mittig in der ersten Buchse oder der zweiten Buchse eingebracht sein. Je größer die Oberfläche der Prägungen sind, desto geringer werden die Klappergeräusche, da eine größere Oberfläche der Prägungen radial weniger Spiel zwischen der Innenwand der ersten Buchse und dem ersten Führungsbolzen oder zwischen der Innenwand der zweiten Buchse und dem zweiten Führungsbolzen zulässt.

In einer weiteren Ausführung ist die erste Buchse oder die zweite Buchse aus einem Metallband oder einem Kunststoffband gebildet. Die Prägungen können sowohl in Metall als auch in Kunststoff eingebracht werden. Die Auswahl des Werkstoffs erhöht die Flexibilität gegenüber Kundenanforderungen. Buchsen aus Kunststoff weisen zusätzlich den Vorteil auf, dass die Schallübertragung und damit die Klappergeräusche bei einem Anschlagen des ersten Führungsbolzen an die Innenwand der ersten Buchse oder bei einem Anschlagen des zweiten Führungsbolzen an die Innenwand des der zweiten Buchse geringer ist, als bei Buchsen aus Metall.

In einer vorteilhaften Weiterbildung sind die Prägungen auf dem Metallband oder dem Kunststoffband vor einem Aufrollprozess zur Ausbildung des Metallbandes oder des Kunststoffbandes zu einer ersten Buchse oder zur Ausbildung des Metallbandes oder des Kunststoffbandes zu einer zweiten Buchse eingebracht. Die Prägungen werden demzufolge nicht erst nach Fertigstellung der ersten Buchse oder der zweiten Buchse eingebracht, sondern vor dem Aufrollprozess. Die erste Buchse oder die zweite Buchse werden aus einem Metallband oder einem Kunststoffband hergestellt, welches als Strang ausgebildet. Die Prägungen können ohne Verformung der ersten Buchse oder der zweiten Buchse einfach und kostengünstig in einem Verfahrensschritt - z.B. durch einem Pressvorgang oder einem Stempelvorgang in das Metallband oder das Kunststoffband eingebracht werden. Die in Richtung des Prägewerkzeugs gerichtete Seite des Metallbandes oder des Kunststoffbandes ist die Außenwand der ersten Buchse oder der zweiten Buchse. Ein zusätzlicher Sintervorgang, bei dem die aufgerollte erste Buchse oder die aufgerollte zweite Buchse in eine ovale Form gebracht wird, entfällt.

In einer weiteren Ausführung weist das Metallband oder das Kunststoffband eine gleichbleibende Materialdicke auf. Zusätzliche Verfahrensschritte zur Anpassung der unterschiedlichen Materialstärke sind nicht notwendig. Weiterhin können die Prägungen bei einem Metallband oder dem Kunststoffband mit einer gleichbleibenden Materialdicke in variablen Abständen eingebracht werden. Die Größe der ersten Buchse ist somit je nach baulicher Gegebenheit der ersten Bolzenführung und/oder des ersten Führungsbolzen variabel anpassbar oder die Größe der zweiten Buchse ist somit je nach baulicher Gegebenheit der zweiten Bolzenführung und/oder des zweiten Führungsbolzen variabel anpassbar.

In einer weiteren vorteilhaften Ausbildung sind die Prägungen der erste Buchse, bezogen auf eine axiale Achse der Scheibenbremse, radial in einem rechten Winkel in der ersten Bolzenführung eingebaut oder die Prägungen der zweite Buchse sind, bezogen auf eine axiale Achse der Scheibenbremse, radial in einem rechten Winkel in der zweiten Bolzenführung eingebaut. Die erste Buchse ist also gerichtet in der ersten Bolzenführung eingebaut oder die zweite Buchse ist gerichtet in der zweiten Bolzenführung eingebaut. Mit der rechtwinkligen Anordnung der Prägungen der ersten Buchse ist das Spiel zwischen der Innenwand der ersten Bolzenführung und dem ersten Führungsbolzen am geringsten ohne dass sich das gewünschte tangentiale Spiel zur Montage des Bremssattels an dem Bremsträger ändert, sofern die zweite Buchse die Prägungen aufweist. Dann ist mit der rechtwinkligen Anordnung der Prägungen der zweiten Buchse das Spiel zwischen der Innenwand der zweiten Bolzenführung und dem zweiten Führungsbolzen am geringsten ohne dass sich das gewünschte tangentiale Spiel zur Montage des Bremssattels an dem Bremsträger ändert. Je mehr die rechtwinklige Einbaulage der Prägungen, bezogen auf die axiale Achse der Scheibenbremse abweicht, desto größer wird das radiale Spiel und desto kleiner wird das tangentiale Spiel zwischen der Innenwand der ersten Buchse und des ersten Führungsbolzen oder der Innenwand der zweiten Buchse und des zweiten Führungsbolzen.

In einer Weiterbildung ist die erste Buchse in einem Durchmesser und die zweite Buchse in einem Durchmesser kreisförmig ausgebildet. Ein zusätzlicher Verfahrensschritt zur Umformung der aufgerollten kreisförmigen ersten Buchse in eine oval geformte erste Buchse oder der aufgerollten kreisförmigen zweiten Buchse in eine oval geformte zweite Buchse ist nicht notwendig, wodurch Produktionskosten eingespart werden.

In einer letzten Ausgestaltung ist die erste Buchse zwischen einem ersten Faltenbalg der ersten Bolzenführung und einer ersten Verschlusskappe der ersten Bolzenführung angeordnet und die zweite Buchse ist zwischen einem zweiten Faltenbalg der zweiten Bolzenführung und einer zweiten Verschlusskappe der zweiten Bolzenführung angeordnet. Die Verschlusskappe und der Faltenbalg der ersten Buchse und die Verschlusskappe und der Faltenbalg der zweiten Buchse schützen die erste Buchse und die zweite Buchse vor Verschmutzungen, womit das radiale und das tangentiale Spiel zwischen dem ersten Führungsbolzen und der ersten Buchse sowie das radiale und das tangentiale Spiel zwischen dem zweiten Führungsbolzen und der zweiten Buchse gleich bleibt. Es ist auch denkbar das zwischen der ersten Buchse und zwischen der ersten Verschlusskappe und/oder zwischen dem ersten Faltenbalg und der ersten Buchse sowie zwischen der zweiten Buchse und der zweiten Verschlusskappe und/oder dem zweiten Faltenbalg und der zweiten Buchse weitere Elemente angeordnet sind.

Nachfolgend werden ausgewählte Ausführungsbeispiele der Erfindung anhand der beigefügten Figuren erläutert.

Es zeigt:
Fig. 1 eine Scheibenbremse mit einer ersten Bolzenführung und einer zweiten Bolzenführung aus einer seitlich gedrehten Ansicht,
Fig. 2 eine geschnittene Ansicht einer Bolzenführung im Detail,
Fig. 3 und 3a eine erste Ausführungsform der ersten oder der zweiten Buchse,
Fig. 4 und 4a eine zweite Ausführungsform der ersten oder der zweiten Buchse,
Fig. 5 und Fig. 5a eine dritte Ausführungsform der ersten oder der zweiten Buchse,
Fig. 6 ein Metallband mit Prägungen,
Fig. 6a ein Kunststoffband mit Prägungen.

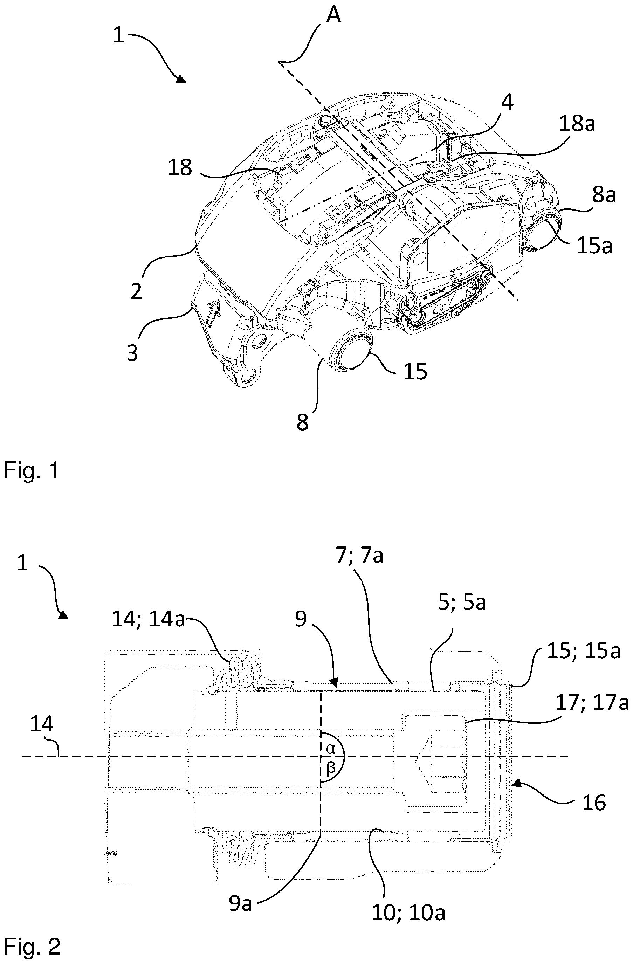

Fig. 1 zeigt eine eingangs erwähnte Scheibenbremse 1 mit einem Bremsträger 3, einer in dem Bremsträger 3 angeordneten Bremsscheibe 6 und einem an dem Bremsträger 3 axial entlang einer Achse A der Scheibenbremse 1 angeordneten Bremssattel 2. Der Bremssattel 2 gleitet axial über dem Bremsträger 3 mittels einem in einer ersten Bolzenführung 8 des Bremssattels 2 angeordneten Führungsbolzen 5 (s. Fig. 2) und einem in einer zweiten Bolzenführung 8a des Bremssattel 2 angeordneten zweiten Führungsbolzen 5a (s. Fig. 2), wobei zwei in dem Bremsträger 3 axial angeordneten Bremsbeläge 18, 18a die Bremsscheibe 6 zuspannen. Der erste Führungsbolzen 5 ist gegen Schmutzeinwirkungen mittels einer ersten, der Bremsscheibe 6 abgewandten Seite, axial an der ersten Bolzenführung 8 angeordneten Verschlusskappe 15 und einem ersten der Bremsscheibe 6 zugewandten Seite, axial angeordneten Faltenbalg 14 geschützt. Der erste Faltenbalg 14 ist mit einem Ende mit dem ersten Führungsbolzen 5 fest verbunden (s. Fig. 2). Der zweiten Führungsbolzen 5a ist durch eine zweite, der Bremsscheibe 6 abgewandten Seite, axial an der zweiten Bolzenführung 8a angeordneten Verschlusskappe 15a und einem, der Bremsscheibe 6 zugewandten Seite, axial angeordneten zweiten Faltenbalg 14a gegen Schmutzeinwirkungen geschützt. Auch der zweite Faltenbalg 14a ist mit einem Ende mit dem zweiten Führungsbolzen 5a fest verbunden (s. Fig. 2).

Fig. 2 zeigt eine geschnittene Teilansicht der Scheibenbremse 1 mit einem erfindungsgemäßen Führungssystem 16 bei dem der erste Führungsbolzen 5 als Spielbolzen ausgeführt ist. Der dem ersten Führungsbolzen 5 achsparallel angeordnete und in Fig. 1 gezeigte zweite Führungsbolzen 5a ist als Passbolzen ausgebildet. Es ist auch denkbar, dass der erste Führungsbolzen 5 als Passbolzen ausgebildet ist und der zweiten Führungsbolzen 5a als Spielbolzen ausgebildet ist. Die als Spielbolzen ausgebildeten Führungsbolzen (5, 5a) sind bauteilgleich, weshalb die Bauteile des Führungssystem 16 doppelte Bezugszeichen aufweisen. Das Führungssystem 16 umfasst mittig zwischen dem ersten Faltenbalg 14 und der ersten Verschlusskappe 15 eine erste Buchse 7, welche den ersten Führungsbolzen 5 umgreift. Die erste Buchse 7 weist radial an einer Innenwand 10 der ersten Buchse 7 Prägungen 9, 9a auf, die das Lüftspiel, also der Abstand zwischen der Innenwand 10 und dem ersten Führungsbolzen 5, vermindert. Die erste Buchse 7 ist gerichtet in der ersten Bolzenführung 8 angeordnet, wobei die Prägungen 9, 9a der ersten Buchse 7 bezogen auf die axiale Achse A in einem rechten Winkel α, β in der ersten Bolzenführung 8 angeordnet sind. Eine erste Schraube 17 des Führungssystems 16 fixiert das Führungssystem 16 an dem Bremsträger 3.

In einer Alternativausführung umfasst das Führungssystem 16 mittig zwischen dem zweiten Faltenbalg 14a und der zweiten Verschlusskappe 15a eine zweite Buchse 7a, welche den zweiten Führungsbolzen 5a umgreift. Die zweite Buchse 7a weist radial an einer Innenwand 10a der zweiten Buchse 7a Prägungen 9, 9a auf, die das Lüftspiel, also der Abstand zwischen der Innenwand 10a und dem zweiten Führungsbolzen 5a, vermindert. Die zweite Buchse 7a ist gerichtet in der zweiten Bolzenführung 8a angeordnet, wobei die Prägungen 9, 9a der zweiten Buchse 7, bezogen auf die axiale Achse A, in einem rechten Winkel α, β in der zweiten Bolzenführung 8a angeordnet sind. Eine zweite Schraube 17a des Führungssystems 16 fixiert das Führungssystem 16 an dem Bremsträger 3.

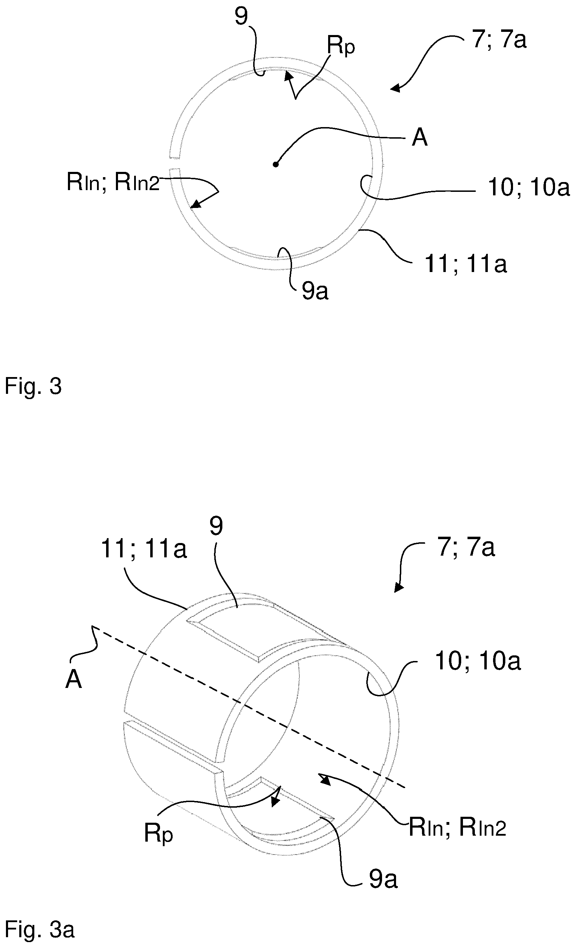

Fig.3 und 3a zeigen die erste Buchse 7 bzw. die zweite Buchse 7a in einer ersten Ausführung. Die Prägungen 9, 9a sind gegenüberliegend radial an der Innenseite 10 der ersten Buchse 7 eingebracht und weisen eine in Richtung der axialen Achse A gerichtete konvexe Form mit einem Radius Rₚ auf. Die Prägungen 9, 9a weisen, ausgehend von der axialen Achse A denselben Radius Rₚ auf, wie ein Innenradius Rᵢₙ der Innenwand 10 der ersten Buchse 7. Die Prägungen 9, 9a sind mit einem Stanzwerkzeug ausgehend von einer Außenwand 11 der ersten Buchse 7 in die erste Buchse 7 eingebracht.

Alternativ sind die Prägungen 9, 9a gegenüberliegend radial an der Innenseite 10a der zweiten Buchse 7a eingebracht und weisen eine in Richtung der axialen Achse A gerichtete konvexe Form mit einem Radius Rₚ auf. Die Prägungen 9, 9a weisen den gleichen Radius auf, wie ein Innenradius Rᵢₙ₂ der Innenwand 10a der zweiten Buchse 7. Die Prägungen 9, 9a sind mit einem Stanzwerkzeug ausgehend von einer Außenwand 11a der zweiten Buchse 7a in die zweite Buchse 7a eingebracht.

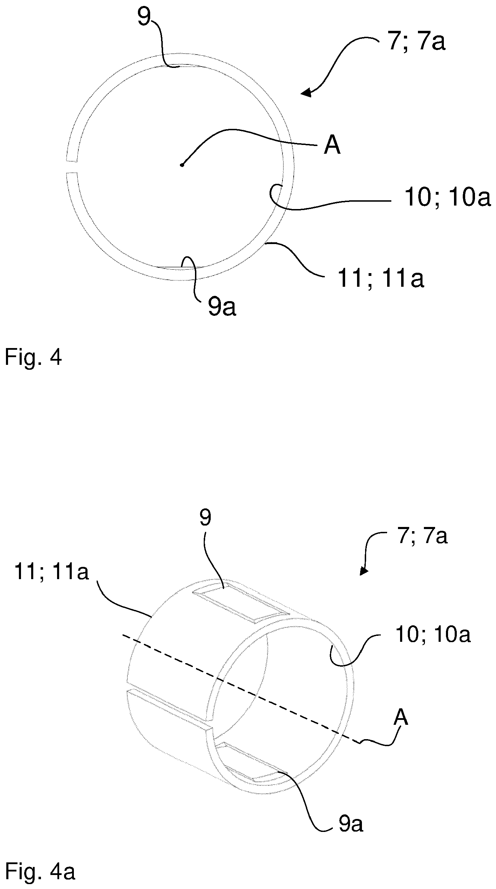

Fig. 4 und 4a zeigen eine zweite Ausführungsform der ersten Buchse 7 bzw. der zweiten Buchse 7a. Die Prägungen 9, 9a sind rippenförmig und abgeflacht in die erste Buchse 7 eingebracht. Die Prägungen 9, 9a sind mit einem Stanzwerkzeug ausgehend von der Außenwand 11 der ersten Buchse 7 in die erste Buchse 7 eingebracht.

Alternativ sind die Prägungen 9, 9a rippenförmig und abgeflacht in die zweite Buchse 7 eingebracht. Die Prägungen 9, 9a sind mit einem Stanzwerkzeug ausgehend von der Außenwand 11 der ersten Buchse 7 in die erste Buchse 7 eingebracht.

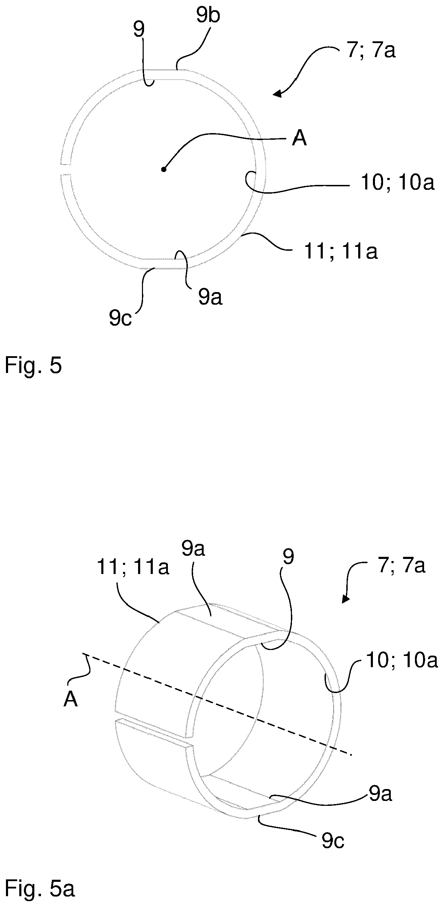

Eine dritte Ausführungsform der ersten Buchse 7 oder der zweiten Buchse 7a zeigen die Figuren 5 und 5a. Die erste Buchse 7 ist nach einem Aufrollverfahren geprägt, in dem die fertig hergestellte erste Buchse 7 im Nachgang fest eingespannt wird und von der Innenseite in Richtung der Innenwand 10 sowie von der Außenseite in Richtung der Außenwand 11 zusammengepresst wird. Dadurch entstehen an der Innenwand 10 abgeflachte Prägungen 9, 9a und an der Außenwand 11 abgeflachte Prägungen 9b, 9c.

Alternativ ist die zweite Buchse 7a nach einem Aufrollverfahren geprägt, in dem die fertig hergestellte zweite Buchse 7a im Nachgang fest eingespannt wird und von der Innenseite in Richtung der Innenwand 10a sowie von der Außenseite in Richtung der Außenwand 11a zusammengepresst wird. Dadurch entstehen an der Innenwand 10a abgeflachte Prägungen 9, 9a und an der Außenwand 11a abgeflachte Prägungen 9b, 9c.

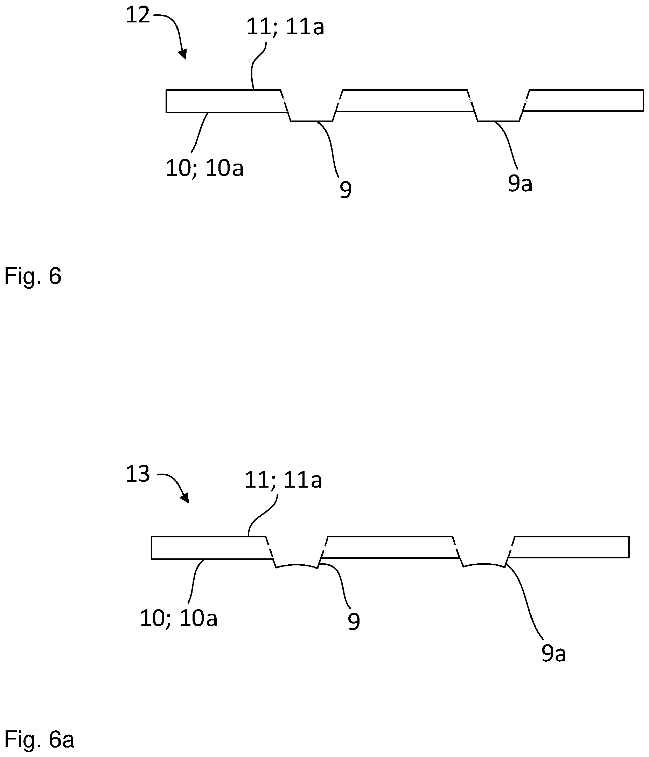

Fig. 6 zeigt ein Ausgangsmaterial in Form eines Metallbandes 12 zur Herstellung einer erste Buchse 7 oder einer zweiten Buchse 7a Prägungen 9, 9b.

Fig. 6a zeigt ein Ausgangsmaterial in Form eines Kunststoffbandes 13 zur Herstellung einer erste Buchse 7 oder einer zweiten Buchse 7a Prägungen 9, 9b.

### Bezugszeichenliste als Teil der Beschreibung

- 1: Scheibenbremse
- 2: Bremssattel
- 3: Bremsträger
- 4: Bremsscheibe
- 5: erster Führungsbolzen
- 5a: zweiter Führungsbolzen
- 6: Bremsscheibe
- 7: erste Buchse
- 7a: zweite Buchse
- 8: erste Bolzenführung
- 8a: zweite Bolzenführung
- 9-9c: Prägungen
- 10: Innenwand der ersten Buchse 7
- 10a: Innenwand der zweiten Buchse 7a
- 11: Außenwand der ersten Buchse 7
- 11a: Außenwand der zweiten Buchse 7a
- 12: Metallband
- 13: Kunststoffband
- 14: erster Faltenbalg
- 14a: zweiter Faltenbalg
- 15: erste Verschlusskappe
- 15a: zweite Verschlusskappe
- 16: Führungssystem
- 17: erste Schraube
- 17a: zweite Schraube
- 18, 18a: Bremsbeläge der Scheibenbremse 1
- A: axiale Achse der Scheibenbremse 1
- α, β: rechter Winkel
- Rₚ: Radius der Prägungen 9, 9a
- Rᵢₙ: Radius der Innenwand 10 der ersten Buchse 7
- Rᵢₙ₂: Radius der Innenwand 10a der zweiten Buchse 7a

## Patentansprüche

1. Scheibenbremse (1) für Fahrzeuge, insbesondere für Nutzfahrzeuge umfassend einen Bremssattel (2) und einen Bremsträger (3), wobei der der Bremssattel (2) während einer, bezogen auf eine Bremsscheibenachse (A), axialen Bewegung über einen ersten Führungsbolzen (5) mit einer den ersten Führungsbolzen (5) zumindest teilweise ummantelten ersten Buchse (7) in einer ersten Bolzenführung (8) des Bremssattels (2) gleitet und über einen zweiten Führungsbolzen (5a) mit einer den zweiten Führungsbolzen (5a) zumindest teilweise ummantelten zweiten Buchse (7a) in einer zweiten Bolzenführung (8a) des Bremsententrägers (3) gleitet, **dadurch gekennzeichnet, dass** zumindest die erste Buchse (7) radial in Richtung des ersten Führungsbolzen (5) wenigstens zwei Prägungen (9, 9a) aufweist oder die zweite Buchse (7a) radial in Richtung des zweiten Führungsbolzen (5a) wenigstens zwei Prägungen (9, 9a) aufweist.

2. Scheibenbremse (1) nach Anspruch 1 **dadurch gekennzeichnet, dass** die Prägungen (9, 9a) in Richtung des ersten Führungsbolzen (5) oder des zweiten Führungsbolzen (5a) eine konvexe Form oder eine abgeflachte Form aufweisen.

3. Scheibenbremse (1) nach Anspruch 1 **dadurch gekennzeichnet, dass** die erste Buchse (7) an einer Innenwand (10), radial in Richtung des ersten Führungsbolzen (5), zumindest zwei Prägungen (9, 9a) und gegenüberliegend, radial entgegengesetzt der Richtung des ersten Führungsbolzen (5), an einer Außenwand (11) zumindest zwei Prägungen (9b, 9c) an einer Außenwand (11) der ersten Buchse (7) aufweist oder das die zweite Buchse (7a) radial in Richtung des zweiten Führungsbolzen (5a) zumindest zwei Prägungen (9, 9a) an einer Innenwand (10a) der zweiten Buchse (7a) und gegenüberliegend, radial entgegengesetzt der Richtung des zweiten Führungsbolzen (5a), zumindest zwei Prägungen (9b, 9c) an einer Außenwand (11a) der zweiten Buchse (7a) aufweist.

4. Scheibenbremse (1) nach einem der vorangegangenen Ansprüche, **dadurch gekennzeichnet, dass** die Prägungen (9, 9a, 9b, 9c) eine Form umfassend ein Rechteck aufweisen.

5. Scheibenbremse (1) nach einem der vorangegangenen Ansprüche, **dadurch gekennzeichnet, dass** die mit wenigstens zwei Prägungen (9, 9a) aufweisende erste Buchse (7) oder die mit wenigstens zwei Prägungen (9, 9a) aufweisende zweite Buchse (7a) aus einem Metallband (12) oder einem Kunststoffband (13) gebildet ist.

6. Scheibenbremse (1) nach Anspruch 5, **dadurch gekennzeichnet, dass** die Prägungen (9, 9a, 9b, 9c) auf dem Metallband (12) oder dem Kunststoffband (13) vor einem Aufrollprozess zur Ausbildung des Metallbandes (12) oder des Kunststoffbandes (13) zu einer ersten Buchse (7) oder zur Ausbildung des Metallbandes (12) oder des Kunststoffbandes (13) zu einer zweiten Buchse (7a) eingebracht sind.

7. Scheibenbremse (1) nach Anspruch 5 oder 6, **dadurch gekennzeichnet, dass** das Metallband (12) oder das Kunststoffband (13) eine gleichbleibende Materialdicke (d) aufweisen.

8. Scheibenbremse (1) nach einem der vorangegangenen Ansprüche, **dadurch gekennzeichnet, dass** die Prägungen (9, 9a) der erste Buchse (7), bezogen auf eine axiale Achse (A) der Scheibenbremse (1), radial in einem rechten Winkel (α, β) in der ersten Bolzenführung (8) eingebaut sind oder das die Prägungen (9, 9a) der zweite Buchse (7a), bezogen auf eine axiale Achse (A) der Scheibenbremse (1), radial in dem rechten Winkel (α, β) in der zweiten Bolzenführung (8a) eingebaut sind.

9. Scheibenbremse (1) nach einem der vorangegangenen Ansprüche, **dadurch gekennzeichnet, dass** die erste Buchse (7) und die zweite Buchse (7a) kreisförmig ausgebildet sind.

10. Scheibenbremse (1) nach einem der vorangegangenen Ansprüche, **dadurch gekennzeichnet, dass** die erste Buchse (7) zwischen einem ersten Faltenbalg (14) der ersten Bolzenführung (8) und einer ersten Verschlusskappe (15) der ersten Bolzenführung (8) und die zweite Buchse (7a) zwischen einem zweiten Faltenbalg (14a) der zweiten Bolzenführung (8a) und einer zweiten Verschlusskappe (15a) der zweiten Bolzenführung (8a) angeordnet sind.
